Europäisches Patentamt

European Patent Office

Office européen des brevets

(19)

(11) Veröffentlichungsnummer: **0 205 508 B1**

## (12) EUROPÄISCHE PATENTSCHRIFT

(45) Veröffentlichungstag der Patentschrift :
**25.09.91 Patentblatt 91/39**

(51) Int. Cl.⁵ : **B23D 45/10,** B27B 25/02,
B23Q 3/00, B23D 47/02,
A22C 25/18, A23G 9/28

(21) Anmeldenummer : **86900114.9**

(22) Anmeldetag : **07.12.85**

(86) Internationale Anmeldenummer :
**PCT/EP85/00685**

(87) Internationale Veröffentlichungsnummer :
**WO 86/03441 19.06.86 Gazette 86/13**

(54) **VORRICHTUNG UND VERFAHREN ZUM ZERTEILEN VON GEFRORENEN LEBENS- UND FUTTERMITTELN.**

(30) Priorität : **13.12.84 DE 3445472**
**29.12.84 DE 3447821**
**06.04.85 DE 3512488**
**01.08.85 DE 3527620**

(43) Veröffentlichungstag der Anmeldung :
**30.12.86 Patentblatt 86/52**

(45) Bekanntmachung des Hinweises auf die
Patenterteilung :
**25.09.91 Patentblatt 91/39**

(84) Benannte Vertragsstaaten :
**AT BE CH DE FR GB IT LI LU NL SE**

(56) Entgegenhaltungen :
**EP-A- 0 155 328**
**DE-A- 1 692 137**
**FR-A- 1 096 835**

(56) Entgegenhaltungen :
**GB-A- 532 608**
**GB-A- 949 495**
**US-A- 1 508 778**
**US-A- 2 941 560**
**US-A- 3 202 189**
**US-A- 4 043 003**
**US-A- 4 193 272**

(73) Patentinhaber : **NIENSTEDT, Heinz**
**Zum Nonnenberg 8a**
**W-4350 Recklinghausen (DE)**

(72) Erfinder : **NIENSTEDT, Heinz**
**Zum Nonnenberg 8a**
**W-4350 Recklinghausen (DE)**

(74) Vertreter : **Patentanwaltsbüro Cohausz &**
**Florack**
**Schumannstrasse 97**
**W-4000 Düsseldorf 1 (DE)**

EP 0 205 508 B1

## Beschreibung

Vorrichtung und Verfahren zum Zerteilen von gefrorenen Lebens- und Futtermitteln in Form von quaderförmigen Körpern in eine Vielzahl von kleineren quaderförmigen Einheiten mittels einer Trennvorrichtung mit kreisenden Trennscheiben.

Die Erfindung bezieht sich auf eine Vorrichtung zum Zerteilen von tiefgefrorenen Lebensmitteln, insbesondere Fisch in Form von quaderförmigen Körpern, wie Platten in eine Vielzahl von kleineren quaderförmigen Einheiten, wie Stäbchen, bestehend aus einem Tisch mit geschlossener Tischplatte, über den die quaderförmigen Körper mit Transportmitteln schiebbar sind, einer Trennvorrichtung mit auf eine Welle im Transportweg der quaderförmigen Körper, oberhalb der Tischplatte, mit Abstand voneinander angeordneten und zwischen versteifenden Scheiben eingespannten, kreisförmigen Trennscheiben von im Verhältnis zur Dicke der quaderförmigen Körper großen Durchmessers und die Oberseite der quaderförmigen Körper angreifenden Niederhalter, insbesondere Druckrollen.

Die Erfindung bezieht sich ferner auf ein Verfahren zum Zerteilen von tiefgefrorenen Lebens- und Futtermitteln, insbesondere Fleisch, Fisch und Gemüse, in Form von quaderförmigen Körpern, wie Platten, in kleinere Einheiten, wie Stäbchen, unter Verwendung einer Trennvorrichtung mit kreisförmigen Trennscheiben, gegenüber der der Körper auf einem Tisch mit geschlossener Tischplatte während des von oben erfolgenden Schnittes vorbewegt wird. (wie es z.B. aus der US-A-1508778 bekannt ist).

Manche Lebensmittel, wie Fisch, werden zu Blöcken tiefgefroren, dann schrittweise in kleinere quaderförmige Einheiten, und zwar in Riegeln, Platten und Stäbchen zerteilt. Als Trennvorrichtungen werden dazu üblicherweise Band- und Kreissägen eingesetzt. Beim Zerteilen der quaderförmigen Platten in eine Vielzahl von quaderförmigen Stäbchen setzt man Vorrichtungen der eingangs genannten Art ein.

Aus der US-Patentschrift US 4193272 ist eine Vorrichtung bekannt, bei der die gefrorenen Platten über eine geschlossene Platte bewegt und durch einen von oben erfolgenden Schnitt zerteilt werden. Der Schnitt wird durch eine Trennvorrichtung ausgeführt, die im wesentlichen aus einer in einem Stück gefertigten Walze besteht. Diese Walze trägt normal zur Walzenachse angeordnete Kreisscheibenmesser, mit denen das Schnittgut in Längsrichtung zerteilt wird, und axial sich erstreckende Messer, durch die Länge der zerteilten Stücke bestimmt wird. Diese doppelte Funktion der Walze bedingt, daß ihre Umfangsgeschwindigkeit gleich der Vorschubgeschwindigkeit des Schnittgutes ist und daß das Schnittgut in Längs- und Querrichtung mit großem Kraftaufwand nach Art einer Stanze zerteilt wird.

Dadurch besteht wegen der spröden Struktur des gefrorenen Gutes die Gefahr, daß die Ränder der kleinen zerteilten Stücke beim Schnitt ausbrechen und ein unsauberer, unschöner Schnitt entsteht.

Bei einer weiteren bekannten Vorrichtung (GB-PS 949 495) sind mehrere Kreissägeblätter parallel nebeneinander auf einer gemeinsamen Welle mit ihrem Antrieb unterhalb des Tisches angeordnet, über den die Platten geschoben werden. In der Tischplatte sind parallele Schlitze angeordnet, durch die die Kreissägeblätter ragen. Da der Produzent von Stäbchen aus den Blöcken möglichst viele Stäbchen herausholen will, ist er bestrebt, mit möglichst wenig Verschnitt das vorgeschriebene Mindestgewicht bei jedem Stäbchen einzuhalten. Das läßt sich nur erreichen, wenn die Stäbchen beim Schneiden eine exakte Quaderform erhalten, was wiederum steife Sägeblätter notwendig macht. Die Steifigkeit eine Sägeblattes hängt aber von der Dicke des Sägeblattes ab. Eine Mindestdicke der an der Peripherie meistens mit Diamantsplittern besetzten Sägeblätter kann deshalb nicht unterschritten werden. Bei Vorrichtungen der eingangs genannten Art werden Kreissägeblätter mit einem Durchmesser von 125 mm und einer Blattdicke von 0,6 mm und einer Dicke von 0,8 bis 0,95 mm an der Peripherie eingesetzt.

Solche Vorrichtungen haben eine Reihe von Nachteilen: Beim Zerschneiden mit derart dicken Sägeblättern wird ein großer Teil des Lebensmittels zerspant und geht deshalb am Gewicht verloren, wenn nicht besondere Gegenmaßnahmen getroffen sind. Eine bekannte Maßnahme besteht darin, daß oberhalb der über den Tisch geförderten Platten Rollen vorgesehen sind, die einen von den Sägeblättern gegen sie geschleuderten Teil des zerspanten Lebensmittels auffangen und zurück auf die Oberfläche der zu Stäbchen zerteilten Platten transportieren. Der Schnittverlust kann auf diese Art und Weise vermindert werden. Ein großer Teil des zerspanten Lebensmittels gelangt aber unter die Tischplatte und geht verloren. Ein weiterer Nachteil beim Einsatz bekannter Vorrichtungen besteht in der heutzutage nicht mehr ausreichenden Leistung. Gefordert werden mindestens 100 Takte ( zu zersägende Platten ) pro Minute. Eine solche Leistung macht einen 30 kw-Motor für eine Säge mit 20 - 24 Sägeblättern der obengenannten Art bei einer Drehzahl der Sägewelle von ca. 8.000 Umdrehungen/min. erforderlich. Bei einer solchen Schneidleistung mit der bekannten Vorrichtung entsteht ein noch größerer Schnittverlust und zusätzlich entsteht beim Zerschneiden auch noch Wärme, die später durch Nachfrieren wieder ausgeglichen werden muß.

Der Erfindung liegt die Aufgabe zugrunde, die Vorrichtung und das Verfahren der eingangs genannten Art dahingehend zu verbessern, daß Zerteilen des Schnittgutes mit niedrigen Schneidkräften und geringem Schnittverlust zu ermöglichen.

Diese Aufgabe wird vorrichtungsmäßig dadurch gelöst, daß die kreisförmigen Trennscheiben als Blätter einer Kreissäge ausgeführt sind und daß oberhalb der Tischplatte an der Austrittseite der Kressäge Mittel zum Auffangen des beim Sägevorgang weggeschlenderten zerspanten Gutes und sofortigen Auftragen dieses Gutes auf die Oberseite der kleineren, quaderförmigen Einheiten angebracht sind. Aufgrund der geschlossenen Tischplatte, in der nur eine wenig tiefe Ausnehmung zum Eintauchen der Scheitel der Sägeblätter eingelassen ist, bleibt die gesamte Menge des zerspanten Gutes auf der Tischoberseite. Da die Messer oberhalb der Tischplatte angeordnet sind, können sie in radialer Richtung durch die versteifenden Distanzscheiben weiter eingespannt werden als bei einer Anordnung unterhalb des Tisches, bei der zuzätzlich noch die Tischplattenstärke berücksichtigt werden müßte. Das bedeutet, daß sie trotz des größeren Durchmessers und der geringeren Blattstärke eine hohe Steifigkeit erhalten. Die kleine Blattstärke führt zu einem geringen Verschnitt und damit zu einer geringeren Zerspanungsarbeit, was sich in mehrfacher Hinsicht günstig auswirkt. Die geringere Zerspanungsarbeit führt zu einem geringeren Kälterverlust. Ein Nachkühlen ist deshalb in der Regel nicht erforderlich. Ferner werden die Lager der Sägewelle weniger stark belastet, so daß sie leichter dimensioniert sein können. Endlich kann die Säge mit geringerer Drehzahl und geringerer elektrischer Leistung betrieben werden.

In der Praxis hat sich gezeigt, daß bei Verwirklichung der erfindungsgemäßen Lehre man mit Sägeblättern auskommt, die einen 1 1/2 bis 2 mal so großen Durchmesser wie die oben erwähnten herkömmlichen Sägeblätter haben. Die Blattstärke kann ein Drittel bis einhalb kleiner als herkömmlich gewählt werden.

Um möglichst viel von dem zerspanten Lebensmittel zurückzugewinnen, sind Mittel zum Auffangen und Auftragen des zerspanten Gutes vorzusehen. So können die auf der Oberseite der Tischplatte angeordneten Niederhalter, die als Druckrollen ausgebildet sind, als Auffangorgane wirken, gegen die das zerspante Lebensmittel geschleudert wird und die es in die kleinen quaderförmigen Einheiten eindrücken, Die als Druckrollen ausgebildeten Niederhalter sind vorzugsweise in den Zwickeln zwischen der Tischplattenoberseite und den Blättern der Kreissäge in Transportrichtung der quaderförmigen Körper vor und hinter der Kreissäge angeordnet.

Verfahrensmäßig wird die Aufgabe dadurch gelöst, daß das Zerteilen durch eine Kreissäge ausgeführt wird, wobei das beim Schnitt zerspante und von der Trennvorrichtung weggeschleuderte Gut über und hinter der Trennvorrichtung aufgefangen und hinter der Trennvorrichtung auf die Oberfläche der zerteilten Einheiten sofort aufgetragen wird.

Wie bei der Vorrichtung bleibt auch bei dem Verfahren der Verschnitt oberhalb der Tischplatte, über den die quaderförmigen Körper transportiert werden. Deshalb läßt sich der gesamte Verschnitt, soweit er nicht beim Zersägen ohnehin auf den kleineren Einheiten bleibt, leicht auffangen und durch geeignete Maßnahmen auf die Oberfläche der kleineren Einheiten wieder auftragen. Sieht man einmal von dem Verlust an beim Schnitt verdampfter Feuchtigkeit ab, ist die Rückgewinnung des zerspanten Gutes vollkommen.

Damit die quaderförmigen Körper beim Teilen einwandfrei geführt werden, können neben den Druckrollen weitere Niederhalter aus zwischen die Blätter greifenden, federelastisch abgestützten Leitfingern vorgesehen sein. Die Leitfinger sind vorzugsweise in peripheren Nuten der Distanzscheiben geführt.

Nach einer weiteren Ausgestaltung der Erfindung ist an der Austrittseite der Blätter eine im Durchmesser große Auffangrolle oder auch Auffangband für zerspantes Lebensmittel angeordnet, die die Oberseite der in kleine Einheiten geteilten Körper berührt. Vorzugsweise ist die Auffangrolle synchron mit den Transportmitteln angetrieben

Schließlich kann zur weiteren Rückgewinnung von zerspantem Lebensmittel über den Blättern auf deren tischabgewandter Seite eine Auffanghaube vorgesehen sein. An bzw. in der Auffanghaube sind vorzugsweise Blasluftdüsen derart angeordnet, daß ihre Blasluft das von der Auffanghaube aufgefangene Lebensmittel zum Ausgang der Kreissäge bläst. Die Auffanghaube sollte in Kammern aufgeteilt sein, in denen jeweils mehrere, vorzugsweise aber nur ein Sägeblatt angeordnet sind. Dadurch kann vor allem bei Einsatz von Blasluft die Rückgewinnung von zerspantem Lebensmitel verbessert werden.

Beim Einsatz eines Luftstromes, mit dessen Hilfe die Rückgewinnung des zerspanten Gutes gefördert wird, läßt sich eine Reihe von weiteren vorteilhaften Maßnahmen verwirklichen. So können dem Luftstrom Zusatzstoffe beigegeben werden. Als Zusatzstoff kann zum Beispiel Wasserdampf oder Nebel verwendet werden. Bei solchen Zusatsstoffen kann sogar der beim Zerteilen verdampfte Feuchtigkeitsanteil wieder zugesetzt werden, so daß der Gewichtsverlust beim Zerteilen weiter minimiert wird. Dem Luftstrom kann aber auch ein Gewürz zugesetzt werden. Das Gewürz kann aus Feststoffen bestehen, aber auch flüssig sein, zum Beispiel Essig.

Im folgenden wird die Erfindung anhand einer ein Ausführungsbeispiel darstellenden Zeichnung näher erläutert.

Im einzelnen zeigen:

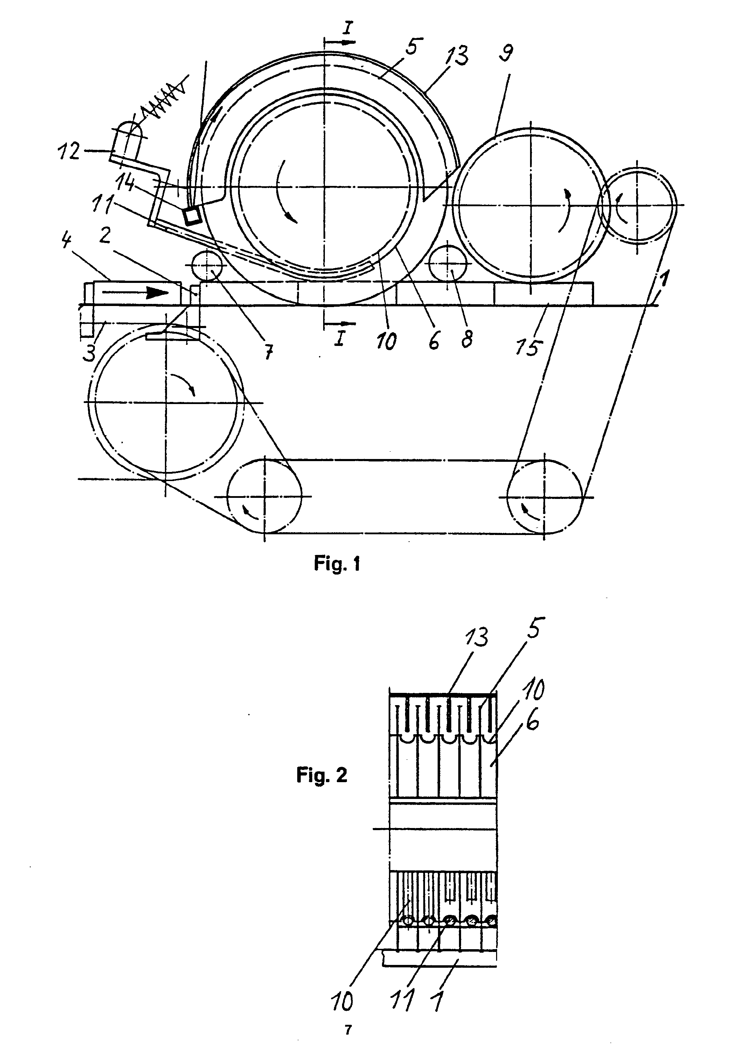

Fig.1 die Vorrichtung in schematischer Darstellung in Seitenansicht

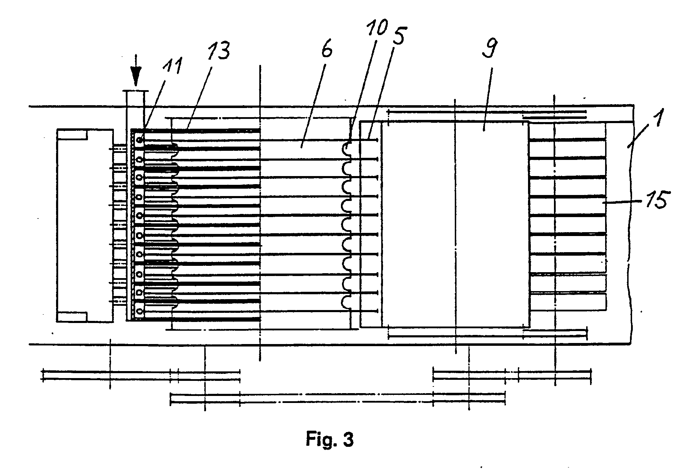

Fig.2 einen Axialschnitt nach der Linie I-I der Fig. 1 im Ausschnitt und

Fig. 3. die Vorrichtung gem. Fig. 1 in Aufsicht.

Quaderförmige, längliche Körper, insbesondere Platten aus einem tiefgefrorenen Lebensmittel, insbesondere Fisch sind in einem in der Zeichnung nicht dargestellten vertikalen Schacht flach übereinander gestapelt. Unter der unteren Öffnung des Schachtes befindet sich eine Tischplatte 1. Von Mitnehmern 2, die von einer endlosen umlaufenden und unterhalb der Tischplatte 1 angeordneten Kette 3 einer Transporteinrichtung getragen werden und die durch Schlitze in der Tischplatte 1 hindurch hinter die Platten 4 greifen, werden die Platten 4 einzeln der Kreissäge zugefördert. Die Schlitze in der Tischplatte 1 enden vor der Kreissäge. Die Tischplatte 1 ist also im Bereich der Kreissäge geschlossen.

Die Kreissäge besteht aus einer Vielzahl von einzelnen Blättern 5, die auf einer gemeinsamen, angetriebenen Welle angeordnet und von Distanzscheiben 6 auf gegenseitigen Abstand gehalten werden. Die Distanzscheiben 6 reichen in radialer Richtung bis auf einen schmalen Rand der Blätter 5, dessen Breite etwa der Dicke der Platten 4 entspricht. Mit ihrem Scheitel tauchen die Sägeblätter 5 nur ganz wenig in entsprechende Nuten der Tischplatte ein, um die Platten 4 einwandfrei zu trennen.

In Transportrichtung der Platten 4 vor und hinter der Kreissäge sind in den von der Oberseite der Platten 4 und den Sägeblättern 5 gebildeten Zwickeln kleine, mitlaufende Druckrollen 7,8 angeordnet. Der Druckrolle 8 ist eine größere, synchron mit der Kette 3 für die Mitnehmer 2 angetriebene Druckrolle 9 nachgeordnet. Die kleineren Druckrollen 7,8 sorgen dafür, daß die Platten 4 beim Sägen sicher auf der Tischplatte 1 gehalten werden. Zu demselben Zweck greifen Finger 11 zwischen die Sägeblätter 5. Diese Finger 11 sind in Nuten 10 der Distanzscheiben 6 geführt und werden von einem federbelasteten Halter 12 getragen.

Die größere Druckrolle 9 dient nicht nur zur Führung der in Stäbchen 15 zerteilten Platten 4, sondern auch zum Auftragen und Eindrücken von aufgefangenem oder bereits auf der Oberfläche der Stäbchen liegendem, zerspanten Gut. Zum Auffangen von zerspantem, von den Sägeblättern 5 weggeschleuderten Gut, dient auch eine Haube 13, die die Sägeblätter 5 auf der tischabgewandten Seite umgibt. Blasdüsen 14 erzeugen in der Haube 13 einen Blasluftstrom, der aufgefangenes, zerspantes Gut in den Bereich der Druckrolle 9 bringt, damit diese es auf die Oberfläche der Stäbchen drückt.

Mit dieser Vorrichtung wird erreicht, daß tiefgefrorenes Lebensmittel mit sehr kleiner Schnittfuge ohne erheblichen Kälteverlust unter Einhaltung einer vorgebenen Geometrie zerteilt wird. Der nicht zu vermeidende Anfall an zerspantem Gut wird zum weitaus größten Teil zurückgewonnen und dem Endprodukt zugeführt.

**Patentansprüche**

1. Vorrichtung zum Zerteilen von tiefgefrorenen Lebensmitteln, insbesondere Fisch, in Form von quaderförmigen Körpern, wie Platten (4), in eine Vielzahl von kleineren, quaderförmigen Einheiten, wie Stäbchen (15), bestehend aus einem Tisch mit geschlossener Tischplatte (1), über den die quaderförmigen Körper (4) mit Transportmitteln (2) schiebbar sind, einer Trennvorrichtung mit auf einer Welle in Transportweg des quaderförmigen Körpers, oberhalb der Tischplatte (1), mit Abstand voneinander angeordneten und zwischen versteifenden Scheiben eingespannten, kreisförmigen Trennscheiben (5) von im Verhältnis zur Dicke der quaderförmigen Körper großen Durchmessers und die Oberseite der quaderförmigen Körper angreifenden Niederhaltern, insbesondere Druckrollen (7,8),
**dadurch gekennzeichnet**, daß die kreisförmigen Trennscheiben (5) als Blätter einer Kreissäge ausgeführt sind und daß oberhalb der Tischplatte (1) and der Austrittseite der Kreissäge Mittel (13,14,9) zum Auffangen des beim Sägevorgang weggeschlenderten zerspanten Gutes und sofortigen Auftragen dieses Gutes auf die Oberseite der kleineren, quaderförmigen Einheiten (15) augebracht sind.

2. Vorrichtung nach Anspruch 1,
**dadurch gekennzeichnet**, daß die Scheiben (6) nur einen der Dicke der quaderförmigen Körper (15) entsprechenden äußeren Rand freilassen.

3. Vorrichtung nach Anspruch 1 oder 2.
**dadurch gekennzeichnet**, daß die als Druckrollen (7,8) ausgebildeten Niederhalter in den Zwickeln zwischen der Oberseite der quaderförmigen Körper (4) und den Blättern (5) der Kreissäge in Transportrichtung der quaderförmigen Körper (4) vor und hinter der Kreissäge angeordnet sind.

4. Vorrichtung nach einem der Ansprüche 1 bis 3,
**dadurch gekennzeichnet**, daß ein weiterer Niederhalter (11) aus zwischen die Blätter greifenden, federelastisch abgestützten Leitfingern (11) vorgesehen ist.

5. Vorrichtung nach Anspruch 4,
**dadurch gekennzeichnet**, daß die Leitfinger (11) in peripheren Nuten (10) der Scheiben (6) geführt sind.

6. Vorrichtung nach einem der Ansprüche 1 bis 5,
**dadurch gekennzeichnet**, daß die Mittel zum Auffangen und Auftragen eine Auffangrolle (9) aufweisen.

7. Vorrichtung nach Anspruch 6,
**dadurch gekennzeichnet**, daß die Auffangrolle (9) synchron mit den Transportmitteln (2,3) angetrieben ist.

8. Vorrichtung nach einem der Ansprüche 1 bis 7,
**dadurch gekennzeichnet**, daß über den Blättern (5) der Kreissäge auf deren tischabgewandten Seite eine Auffanghaube (13) angeordnet ist.

9. Vorrichtung nach Anspruch 8,

**dadurch gekennzeichnet,** daß an bzw. in der Auffanghaube (13) Blasluftdüsen (14)

derart angeordnet sind, daß ihre Blasluft das von der Auffanghaube (13) aufgefangene Lebensmittel zum Ausgang der Kressäge bläst.

10. Vorrichtung nach Anspruch 8 oder 9,
**dadurch gekennzeichnet ,** daß die Auffanghaube (13) in Kammern aufgeteilt ist.

11. Vorrichtung nach Anspruch 10,
**dadurch gekennzeichnet ,** daß in jeder Kammer (5) ein Sägeblatt angeordnet ist.

12. Verfahren zum Zerteilen von tiefgefrorenen Lebens- und Futtermitteln, insbesondere Fleisch, Fisch und Gemüse, in Form von quaderförmigen Körpen, wie Platten (4), in kleinere Einheiten, wie Stäbchen (15), unter Verwendung einer Trennvorrichtung mit kreisförmigen Trennscheiben (5), gegenüber der der Körper auf einem Tish mit geschlossener Tischplatte (1) während des von oben erfolgenden Schnitts vorbewegt wird,
**dadurch gekennzeichnet,** daß das Zerteilen durch eine Kreissäge (5) ausgeführt wird, wobei das beim Schnitt zerspante und von Trennvorrichtung weggeschleuderte Gut über und hinter der Trennvorrichtung aufgefangen und hinter der Trennvorrichtung auf die Oberfläche der zeiteilten Einheiten sofort aufgetragen wird.

13. Verfahren nach Anspruch 12.
**dadurch gekennzeichnet ,** daß das zerspante Gut mittels eines Luftstroms zur Auftragsstelle transportiert wird.

14. Verfahren nach Anspruch 13,
**dadurch gekennzeichnet ,** daß dem Luftstrom Zusatzstoffe beigegeben werden.

15. Verfahren nach Anspruch 13,
**dadurch gekennzeichnet ,** daß anstatt des Luftstromes Wasserdampf oder Nebel verwendet wird.

16 . Verfahren nach Anspruch 14,
**dadurch gekennzeichnet ,** daß als Zusatzstoff ein Gewürz verwendet wird.

**Revendications**

1. Dispositif pour séparer des denrées alimentaires congelées, en particulier du poisson, sous forme de corps parallélépipédique comme des plaques (4), en une pluralité d'unités parallélépipèdiques plus petites, comme des bâtonnets (15), constitué d'une table avec une plaque (1) de table fermée au-dessus de laquelle les corps parallélépipédiques (4) peuvent coulisser par des moyens de transport (2), un dispositif séparateur avec des disques séparateurs (5) circulaires disposés à écartement les uns des autres sur un arbre dans le chemin de transport du corps parallélépipédique, au-dessus de la plaque (1) de table et serrées entre des disques raidisseurs, avec un diamètre important par rapport à l'épaisseur des corps parallélépipédiques, et des serre-flans, en particulier des cylindres presseurs (7, 8), coopérant avec les corps parallélépipédiques,
caractérisé en ce que les disques séparateurs circulaires (5) sont réalisés sous forme de lames d'une scie circulaire et que, au-dessus de la plaque (1) de table, sur le côté de sortie de la scie circulaire, des moyens (13, 14, 9) sont prévus pour intercepter la matière coupée éjectée pendant l'opération de sciage et pour déposer immédiatement cette matière sur la surface des unités parallèlépipédiques plus petites (15).

2. Dispositif selon la revendication 1,
caractérisé en ce que les disques (6) ne laissent libre qu'un bord extérieur correspondant à l'épaisseur des corps parallélépipédiques (15).

3. Dispositif selon la revendication 1 ou 2,
caractérisé en ce que les serre-flans construits sous forme de rouleaux presseurs (7, 8) sont disposés dans les goussets entre la surface des corps parallélépipédiques (4) et les lames (5) de la scie circulaire devant et derrière la scie circulaire en direction de transport des corps parallélépipédiques (4).

4. Dispositif selon l'une des revendications 1 à 3,
caractérisé en ce qu'un serre-flan (11) supplémentaire en doigts de guidage (11) s'appuyant à élasticité de ressort et en prise entre les lames, est prévu.

5. Dispositif selon la revendication 4,
caractérisé en ce que les doigts de guidage (11) sont guidés dans des gorges périphériques (10) des disques (6).

6. Dispositif selon l'une des revendications 1 à 5,
caractérisé en ce que les moyens pour intercepter et déposer présentent un cylindre intercepteur (9).

7. Dispositif selon la revendication 6,
caractérisé en ce que le cylindre intercepteur (9) est entraîné en synchronisme avec les moyens de transport (2, 3).

8. Dispositif selon l'une des revendications 1 à 7,
caractérisé en ce qu'une cloche d'interception (13) est disposée au-dessus des lames (5) de la scie circulaire sur leur côté écarté de la table.

9. Dispositif selon la revendication 8,
des buses de soufflage (14) sont disposées sur ou dans la cloche d'interception (13) de telle manière que leur air de soufflage envoie la denrée alimentaire interceptée par la cloche d'interception (13) vers la sortie de la scie circulaire.

10. Dispositif selon la revendication 8 ou 9,
caractérisé en ce que la cloche d'interception (13) est divisée en chambres.

11. Dispositif selon la revendication 10,
caractérisé en ce qu'une lame de scie est disposée dans chaque chambre (5).

12. Procédé pour séparer des denrées alimentaires et d'alimentation animale congelées, en particulier viande, poisson et légumes, sous forme de corps parallélépipédiques, comme des plaques (4), en plus petites unités, comme des bâtonnets (15), en utilisant un dispositif de séparation avec des disques séparateurs (5) circulaires par rapport auxquels les corps sont déplacés devant sur une table avec une plaque de table (1) fermée pendant la coupe se produisant par dessus, caractérisé en ce que la division est effectuée par une scie circulaire (5), la matière coupée pendant la coupe et éjectée par le dispositif de séparation étant interceptée sur et derrière le dispositif de séparation et déposée immédiatement derrière le dispositif de séparation sur la surface des unités séparées.

13. Procédé selon la revendication 12, caractérisé en ce que la matière coupée est transportée à l'emplacement de dépôt au moyen d'un courant d'air.

14. Procédé selon la revendication 13, caractérisé en ce que des additifs sont ajoutés au courant d'air.

15. Procédé selon la revendication 13, caractérisé en ce que, au lieu d'un courant d'air, on utilise de la vapeur d'eau ou un brouillard.

16. Procédé selon la revendication 14, caractérisé en ce qu'on utilise une épice comme additif.

## Claims

1. A device for cutting up deep-frozen foodstuffs, more particularly fish, in the form of parallelipipedic bodies such as slabs (4) into a plurality of smaller parallelipipedic units, such as small bars (15), comprising a table having a closed table top (1) over which the parallelipipedic bodies (4) can be slid by conveying means (2), a parting device having circular parting discs (5) of larger diameter than the thickness of the parallelipipedic bodies and clamped spaced out between reinforcing discs above the table top (1) on a shaft in the conveying path of the parallelipipedic bodies, and hold-down means, more particularly pressure rollers (7, 8) engaging with the top side of the parallelipipedic bodies, characterized in that the circular parting discs (5) are constructed in the form of blades of a circular saw, and disposed above the table top (1) on the outlet side of the circular saw are means (13, 14, 9) for intercepting the cut-off material hurled away during the sawing operation and for immediately applying said material to the top side of the smaller parallelipipedic units (15).

2. A device according to claim 1, characterized in that the discs (6) leave free only an outer edge corresponding to the thickness of the parallelipipedic bodies (15).

3. A device according to claims 1 or 2, characterized in that the hold-down means taking the form of pressure rollers (7, 8) are disposed in the gusset between the top side of the parallelipipedic bodies (4) and the blades (5) of the circular saw upstream and downstream thereof in the conveying direction of the parallelipipedic bodies (4).

4. A device according to one of claims 1 to 3, characterized in that a further hold-down means (11) is provided which consists of resiliently borne deflecting fingers (11) engaging between the blades.

5. A device according to claim 4, characterized in that the deflecting fingers (11) are guided in peripheral grooves (10) in the discs (6).

6. A device according to one of claims 1 to 5, characterized in that the means for intercepting and applying the material have an intercepting roller (9).

7. A device according to claim 6, characterized in that the intercepting roller (9) is driven synchronously with the conveying means (2,3).

8. A device according to one of claims 1 to 7, characterized in that the intercepting hood (13) is disposed above the blades (5) of the circular saw on its side remote from the table.

9. A device according to claim 8, characterized in that air blowing nozzles (14) are so disposed in or on an intercepting hood (13) that their blowing air blows the foodstuff intercepted by the intercepting hood (13) towards the outlet of the circular saw.

10. A device according to claims 8 or 9, characterized in that the intercepting hood (13) is subdivided into chambers.

11. A device according to claim 10, characterized in that a saw blade is disposed in each chamber (5).

12. A method of cutting up deep-frozen foodstuffs and fodders, more particularly meat, fish and vegetables, in the form of parallelipipedic bodies such as slabs (4) into smaller units, such as small bars (15), using a parting device which has circular parting discs (5) and in relation to which the bodies are advanced on a table having a closed table top (1) during the cutting, which is performed from above, characterized in that the cutting-up is performed by a circular saw (5), the material cut off during cutting and hurled away by the parting device being intercepted above and downstream of the parting device and immediately applied to the surface of the cut-up units downstream of the parting device.

13. A method according to claim 12, characterized in that the cut-up material is conveyed to the place of application by an air stream.

14. A method according to claim 12, characterized in that additives are introduced into the air stream.

15. A method according to claim 13, characterized in that steam or mist is used instead of the air stream.

16. A method according to claim 13, characterized in that the additive used is a spice.

EP 0 205 508 B1

**Fig. 1**

**Fig. 2**

7

**Fig. 3**